# EUROPEAN PATENT SPECIFICATION

(11) **EP 3 358 158 B1**
(45) Date of publication and mention of the grant of the patent: **16.09.2020**
(21) Application number: 18152163.4
(22) Date of filing: 17.01.2018
(51) Int. Cl.: F01N 3/20

(54) **EXHAUST GAS PURIFICATION DEVICE**
ABGASREINIGUNGSVORRICHTUNG
DISPOSITIF DE PURIFICATION DE GAZ D'ÉCHAPPEMENT

(30) Priority: 02.02.2017 JP 2017017582
(43) Date of publication of application: 08.08.2018
(73) Proprietor: Mitsubishi Jidosha Kogyo Kabushiki Kaisha, Tokyo 108-8410 (JP)
(72) Inventor: Kawashima, Kazuhito, Tokyo, 108-8410 (JP); Anoda, Hiroshi, Tokyo, 108-8410 (JP); Kato, Ryoji, Tokyo, 108-8410 (JP); Takahashi, Masashi, Tokyo, 108-8410 (JP); Sato, Daisuke, Tokyo, 108-8410 (JP)
(74) Representative: Vossius & Partner Patentanwälte Rechtsanwälte mbB

(56) References cited:
- WO-A1-2013/127936
- DE-A1-102009 021 616
- DE-A1-102015 212 485
- US-A1- 2011 146 254

## Description

### TECHNICAL FIELD

The present disclosure relates to an exhaust gas purification device of an engine, which purifies exhaust gas discharged from the engine.

### BACKGROUND

Generally, as an exhaust gas purification device for a diesel engine or the like, a diesel oxidation catalyst and a diesel particulate matter filter are used, for instance, in order to purify diesel exhaust particulate matters (PM) and nitrogen oxide (NOx) contained in exhaust gas.

Furthermore, there is a system using a NOx trap catalyst or a urea selective catalytic reduction device, for instance, in order to purify nitrogen oxide (NOx) contained in lean exhaust gas.

A urea selective catalytic reduction device injects urea solution, which serves as a reductant, into exhaust gas through a reductant injector disposed upstream a reduction catalyst body, thereby utilizing thermal decomposition of the urea into ammonia (NH₃) by heat of exhaust gas. The produced ammonia reacts with nitrogen oxide in exhaust gas in the vicinity of the reduction catalyst body, and turns into nitrogen gas (N₂) and water (H₂O). Accordingly, nitrogen oxide in the exhaust gas is purified.

For instance, in Patent Document 1 (JP2012-122469A), a diesel oxidation catalyst device and a diesel particulate matter filter are disposed in series along the gas flow direction of an exhaust passage, and a reductant injector and a reduction catalyst body of a urea selection catalytic reduction device are disposed in series on the downstream side of the diesel particulate matter filter.

Patent Document 2 (WO 2013/127936 A1) describes a method for operating an exhaust gas treatment device comprising an electric heater for heating an exhaust gas flow in the exhaust gas treatment device and/or a surface in the exhaust gas treatment device and comprising a feeding point for feeding an additive into the exhaust gas treatment device so that the additive impinges upon the electric heater. Other relevant documents are DE 102015212485 A1 and US 2011/146254 A1.

### SUMMARY

Generally, a urea selection catalytic reduction device has an excellent purification property of purifying nitrogen oxide in a high temperature region compared to a nitrogen oxide trap catalyst device, but its purification performance tends to deteriorate in a low temperature region. Thus, in recent years, a urea selective catalytic reduction device is often located at a position more proximate to the engine to ensure a high reaction temperature.

When a urea selective catalytic reduction device is positioned proximate to the engine, the distance between the combustion chamber of the engine and the reduction catalyst body of the urea selective catalytic reduction device becomes shorter. Thus, it is difficult to distribute injected urea solution uniformly over the entire exhaust gas before the exhaust gas enters the reduction catalyst body.

If, hypothetically, the urea solution is not uniform enough in exhaust gas, it may be difficult to exert a sufficient purification performance for the amount of urea solution supplied thereto. Therefore, a mixer is often provided downstream the reductant injector, for spreading urea solution throughout exhaust gas.

A mixer is effective to some extent, in spreading urea solution over exhaust gas. However, to distribute urea solution over exhaust gas evenly on a constant basis even in various operational states and temperature conditions that change from hour to hour, further improvement is required.

Thus, an object of at least one embodiment of the present invention is to improve homogeneity of a reductant injected into exhaust gas.

To solve the above problem, an exhaust gas purification device of an engine according to at least one embodiment of the present invention includes: an exhaust passage extending from a combustion chamber of an engine; a member which is disposed on an inner side of an inner wall surface of the exhaust passage and which is to be heated by exhaust gas passing thereby; a reductant injector disposed downstream the member and configured to inject a reductant into the exhaust gas; and a reduction catalyst for purifying nitrogen oxide contained in the exhaust gas with the reductant or a substance produced from the reductant. The reductant injector is disposed on the outer side of a bend section connecting straight sections of the exhaust passage such that an injection nozzle of the reductant injector faces a downstream end portion of the member and configured to inject the reductant toward a downstream end portion of the member, wherein the reductant is urea and the downstream end portion of the member supports an ammonia production promoting catalyst configured to promote production of ammonia from the urea, the reductant injector is disposed inside an offset hole having a recessed shape and having an opening into the exhaust passage and the injection nozzle of the reductant injector is disposed further back from the inner wall surface of the exhaust passage.

With the above configuration, a reductant is injected by the reductant injector toward the downstream end portion of the member disposed upstream of the reductant injector, and thus the reductant faces opposite to the flow direction of exhaust gas, whereby the penetration force in injection is weakened. Furthermore, the injected reductant adheres to the downstream end portion of the member having a temperature increased by exhaust gas. Accordingly, evaporation of the reductant is promoted by the member having a temperature relatively higher than the inner wall surface of the exhaust passage, and thereby it is possible to homogenize distribution of the reductant in exhaust gas.

### BRIEF DESCRIPTION OF DRAWINGS

FIG. 1 is a schematic diagram of an exhaust gas purification device of an engine according to an embodiment of the present invention.
FIG. 2 is a schematic diagram showing a modified example of FIG. 1.
FIG. 3 is a schematic diagram showing a part of another modified example of FIG. 1.

### DETAILED DESCRIPTION

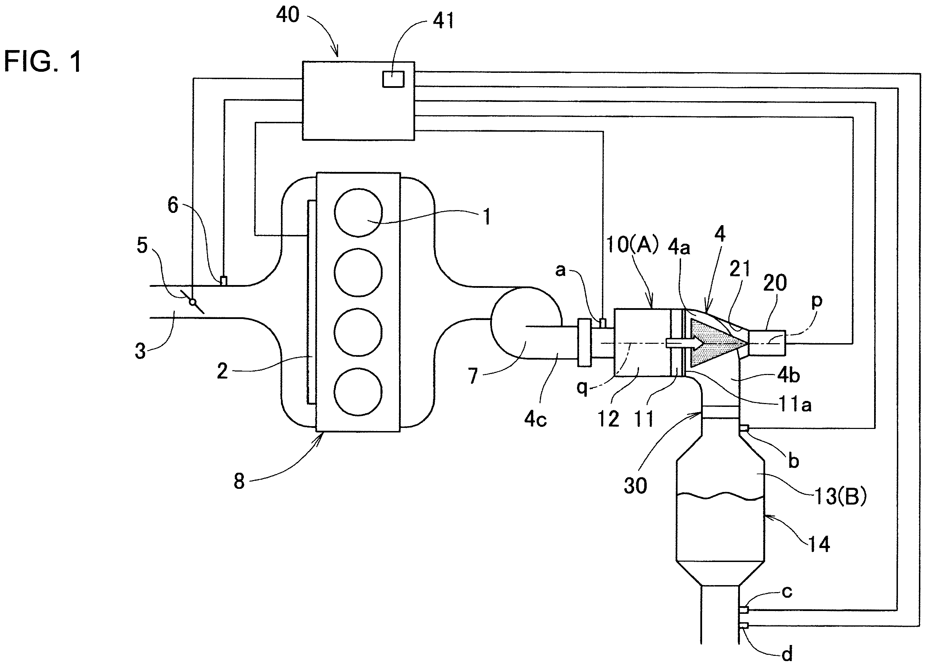

Hereinafter, an embodiment of the present invention will be described with reference to the drawings. FIG. 1 is a schematic diagram showing a conceptual configuration of an exhaust gas purification device of an engine according to the present embodiment.

As shown in FIG. 1, an intake passage 3 and an exhaust passage 4 are connected to a combustion chamber 1 of an engine 8. The combustion chamber 1 is supplied with air through the intake passage 3. Furthermore, fuel is injected into the combustion chamber 1 by a fuel injection device 2. Exhaust gas from the combustion chamber 1 is sent out through the exhaust passage 4 drawn out from the combustion chamber 1, passes through an exhaust gas purification part for removing harmful substances, and then is discharged to atmosphere.

In the intake passage 3 connecting to the combustion chamber 1, an air cleaner, a throttle valve 5 for changing the passage cross-sectional area to control the flow-rate of intake air, an air flow sensor 6 for detecting the intake air amount, and the like, are disposed in series from upstream toward downstream.

In the exhaust passage 4 drawn out from the combustion chamber 1, a turbine 7 of a mechanical supercharger, a diesel oxidation catalyst device serving as an upstream exhaust gas purification part A, a reductant injector 20 for injecting a reductant into exhaust gas, a mixer 30 for spreading the reductant in the exhaust gas to homogenize the reductant, a reduction catalyst 13 for purifying nitrogen oxide in exhaust gas with the reductant or a substance produced from the reductant, a muffler serving as a noise canceling device , and the like, are disposed in series from upstream toward downstream.

The reductant injector 20, the mixer 30, the reduction catalyst 13, and the like, constitute a urea selective catalytic reduction device 14 that serves as a downstream exhaust gas purification part B.

The diesel oxidation catalyst device has a space inside, which has a greater cross section than the exhaust passage 4 in front and rear thereof. Inside the space, a honeycomb-structure member is housed as a carrier 12. The carrier 12 includes an assembly of a number of cells through which exhaust gas can pass through. The material of the carrier 12 is, for instance, crystalline ceramics (cordierite composition), which has a small thermal expansion coefficient and a high resistance against thermal shock. A surface of the carrier supports metal for exerting the function of a catalyst. Accordingly, it is possible to purify harmful substances such as carbon monoxide and carbon hydride contained in passing exhaust gas into harmless substances such as water and carbon dioxide.

As described above, the diesel oxidation catalyst device includes a member to be heated by exhaust passage passing thereby (above carrier 12), on the inner side of the inner wall surface of the exhaust pipe wall of the exhaust passage 4, and the member to be heated may reach a relatively higher temperature than the exhaust pipe wall of the exhaust passage 4, whose outer wall surface is exposed to outside air. Thus, hereinafter, this member to be heated in the diesel oxidation catalyst device will be referred to as a member 10.

The member 10 constituting the upstream exhaust gas purification part A, and the urea selective catalytic reduction device 14 serving as the downstream exhaust gas purification part B, are both disposed as a proximate catalyst which is disposed proximate to the combustion chamber 1 of the engine 8, in an environment often exposed to relatively high-temperature exhaust gas.

The reductant injector 20 injects a reductant toward a downstream end portion 11 of the member 10, that is, toward the upstream side. Herein, urea (CO(NH₂)₂) is used as a reductant.

Urea is injected in a state of solution from the reductant injector 20, to spread out over the exhaust gas, while a part of the urea solution adheres to the member 10. Then, the urea is decomposed by high heat of the member 10 and exhaust gas, thus producing ammonia. The urea adheres to the member 10 having a high temperature, and thereby decomposition of the urea into ammonia is promoted. The exhaust gas pipe wall has an outer surface exposed to outside air and thus has a lower temperature than the member 10. Thus, when urea adheres to the exhaust gas pipe wall, the temperature of the urea decreases, which impedes vaporization. Thus, it is desirable that urea is injected toward the downstream end portion 11 of the member 10.

Furthermore, in the present embodiment, an ammonia production promoting catalyst 11a which promotes production of ammonia from urea is supported by the downstream end portion 11 of the member 10, and thus ammonia is produced smoothly. The ammonia production promoting catalyst 11a can be supported on the surface of a downstream end portion of the carrier 12.

The reductant injector 20 is disposed inside an offset hole 21 having a recessed shape and having an opening into the exhaust passage 4. Thus, the injection nozzle of the reductant injector 20 is disposed slightly further back from the inner wall surface of the exhaust passage 4. Thus, it is possible to provide a spreading part between the injection nozzle and the pipe, whereby it is possible to ensure a long injection distance from the injection nozzle to the member 10, as well as to protect the reductant injector 20 from heat of exhaust gas. Furthermore, the reductant injector 20 does not obstruct the flow of exhaust gas.

The reductant injector 20 injects a reductant in a direction facing the flow direction of exhaust gas in the exhaust passage 4. In this embodiment, the reductant injector 20 is disposed on the outer side of a bend section 4a connecting straight sections 4b, 4c of the exhaust passage 4, and the injection direction of a reductant is 180-degree opposite to the flow direction of exhaust gas. In other words, in the present embodiment, as shown in FIG. 1, the injection center line 'p' in the injection direction of the reductant injector 20 and the flow center line 'q' of exhaust gas in the exhaust passage 4 are aligned with or parallel to each other. Thus, with the flow of exhaust gas, it is possible to weaken the penetration force of the injected reductant, thus promoting spreading and homogenization of the reductant.

Inside the reduction catalyst 13 and in the vicinity thereof, thanks to the catalytic function of the reduction catalyst 13, ammonia produced from urea and nitrogen oxide contained in exhaust gas react, and thereby nitrogen gas and water are produced. Accordingly, exhaust gas is purified before being released to the atmosphere.

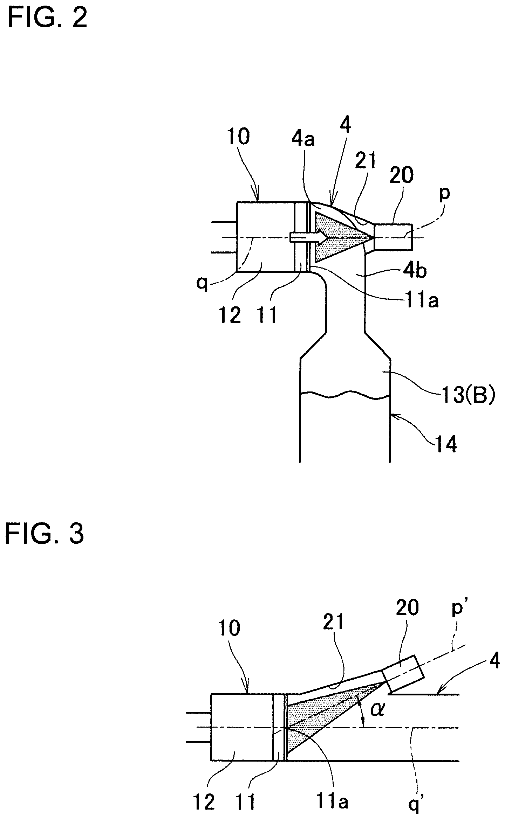

Herein, since the mixer 30 is provided between the reductant injector 20 and the reduction catalyst 13, spreading and homogenization of urea, which is a reductant, are further promoted. Thus, smooth production of ammonia and reaction between ammonia and nitrogen oxide are achieved. However, in a case where spreading and homogenization of a reductant in exhaust gas are performed sufficiently in the vicinity of the member 10, the mixer 30 may be omitted, as shown in the modified example of FIG. 2.

Furthermore, for instance, as shown in the modified example of FIG. 3, the injection center line 'p" in the injection direction of the reductant injector 20 may be in such a direction that faces the flow center line 'q" of exhaust gas in the exhaust passage 4 at an angle α (0<α<90 degrees). In this modification example, the reductant agent is injected in a direction facing the flow direction of exhaust gas inside the exhaust passage 4, and is injected to the downstream end portion 11 of the member 10. The embodiment according to FIG. 3 is an illustrative example.

In the exhaust passage 4, as shown in FIG. 1, an ammonia detection part 'b' is disposed upstream the reduction catalyst 13 (in the vicinity of the inlet), for obtaining information on the inflow amount of ammonia. Furthermore, a nitrogen oxide detection part 'c' for obtaining information on the discharge amount of nitrogen oxide and an O₂ sensor 'd' are disposed downstream the reduction catalyst 13 (in the vicinity of the outlet). Furthermore, an exhaust gas temperature detection unit 'a' for detecting the temperature of exhaust gas is disposed upstream the member 10 (in the vicinity of the inlet).

A vehicle equipped with this engine 8 is further provided with an electronic control unit (ECU) 40. The electronic control unit 40 controls all devices required to operate the engine 8, including intake and exhaust valves and a fuel injection device, and various type of vehicle equipment, for instance. Furthermore, information from various sensors is transmitted to the electronic control unit 40 through a cable.

The electronic control unit 40 includes an engine control device 41 which controls the fuel injection amount and the intake amount supplied to the combustion chamber 1, or the amount or time of reductant injection, on the basis of information on the inflow amount of ammonia obtained by the ammonia detection part 'b' and information on the discharge amount of the nitrogen oxide obtained by the nitrogen oxide detection part 'c'.

Through these controls, the engine control device 31 controls the amount of ammonia produced on the upstream side of the reduction catalyst 13 depending on the operational state, whereby it is possible to reduce the discharge amount of nitrogen oxide.

Furthermore, in the above embodiment, the member to be heated by exhaust gas in the member 10 is the carrier 12 of a honeycomb structure disposed on the inner side of the inner wall surface of the exhaust passage 4, but a member other than a honeycomb-structure member may be provided as the carrier 12, such as a perforated member, a plate-shaped member, a rod-shaped member, and a mesh-shaped member.

Furthermore, as the member 10, a member in another form constituting an exhaust gas purification part may be provided instead of a member constituting the diesel oxidation catalyst device, such as a filter member constituting a diesel particulate matter filter. Alternatively, as the member 10, a member for a purpose other than exhaust gas purification may be provided, such as a member of various shape provided for flow rectification, pressure regulation, or the like. At this time, the shape of the member may include honeycomb shape, perforated shape, plate shape, rod shape, mesh shape, and the like.

Furthermore, while urea is used as a reductant in the above embodiment, the present invention may be applied to a case in which a reductant other than urea is used. For instance, ammonia may be used as a reductant, and ammonia solution or the like may be injected.

Furthermore, while both of the upstream exhaust gas purification part A and the downstream exhaust gas purification part B are proximate catalysts in the above embodiment, the present invention can be also applied to a case in which the upstream exhaust gas purification part A and the downstream exhaust gas purification part B are each provided as an underfloor catalyst disposed remote from the combustion chamber 1 of the engine 8 in an environment rarely exposed to relatively high-temperature exhaust gas.

In the above embodiment, purification of exhaust gas in a diesel engine has been described. However, the present invention can be applied to not only to diesel engines but engines in general, as long as an engine includes a reduction catalyst body that purifies nitrogen oxide in exhaust gas with a reductant or a substance produced from the reductant, through injection of the reductant into exhaust gas.

## Claims

1. An exhaust gas purification device of an engine, comprising:
an exhaust passage (4) extending from a combustion chamber (1) of an engine (8);
a member (10) which is disposed on an inner side of an inner wall surface of the exhaust passage and which is to be heated by exhaust gas passing thereby;
a reductant injector (20) disposed downstream the member (10) and configured to inject a reductant into the exhaust gas; and
a reduction catalyst (13) for purifying nitrogen oxide contained in the exhaust gas with the reductant or a substance produced from the reductant,
wherein the reductant injector (20) is disposed on the outer side of a bend section (4a) connecting straight sections (4b, 4c) of the exhaust passage (4) such that an injection nozzle of the reductant injector (20) faces a downstream end portion (11) of the member (10) and configured to inject the reductant toward a downstream end portion (11) of the member (10), and wherein
the reductant is urea and the downstream end portion (11) of the member (10) supports an ammonia production promoting catalyst (11a) configured to promote production of ammonia from the urea, **characterized in that**
the reductant injector (20) is disposed inside an offset hole (21) having a recessed shape and having an opening into the exhaust passage (4) and the injection nozzle of the reductant injector (20) is disposed further back from the inner wall surface of the exhaust passage (4).

2. The exhaust gas purification device of an engine, according to claim 1,
wherein an injection center line (p) in the injection direction of the reductant injector (20) and a flow center line (q) of the exhaust gas in the exhaust passage (4) are aligned with or parallel to each other.

3. The exhaust gas purification device of an engine, according to claim 1 or 2,
wherein the injection direction of the reductant is 180-degree opposite to the flow direction of exhaust gas.

4. The exhaust gas purification device of an engine, according to any one of claims 1 to 3, wherein the member (10) comprises a part of an exhaust gas purification part (A).

5. The exhaust gas purification device of an engine, according to any one of claims 1 to 4,
wherein the member (10) comprises a perforated member, a plate-shaped member, a rod-shaped member, a mesh-shaped member, or a honeycomb-structure member disposed on the inner side of the inner wall surface of the exhaust passage (4).

6. The exhaust gas purification device of an engine, according to any one of claims 1 to 5
wherein the offset hole (21) has a spreading part disposed between the exhaust passage (4) and the reductant injector (20) and configured to spread a reductant.

7. The exhaust gas purification device of an engine, according to any one of claims 1 to 6, further comprising a mixer (30) disposed between the reductant injector (20) and the reduction catalyst (13).

## Patentansprüche

1. Abgasreinigungsvorrichtung eines Motors, aufweisend:
einen Abgaskanal (4), der sich von einer Brennkammer (1) eines Motors (8) erstreckt;
ein Element (10), das auf einer Innenseite einer Innenwandfläche des Abgaskanals angeordnet und durch daran vorbeiströmendes Abgas erwärmt werden soll;
ein Reduktionsmittel-Injektor (20), der dem Element (10) nachgeordnet und zum Einspritzen eines Reduktionsmittels in das Abgas ausgebildet ist; und
einen Reduktionskatalysator (13) zum Reinigen von im Abgas enthaltenem Stickstoffoxid mit dem Reduktionsmittel oder einem aus dem Reduktionsmittel erzeugten Stoff,
wobei der Reduktionsmittel-Injektor (20) auf der Außenseite eines gebogenen Abschnitts (4a) angeordnet ist, der gerade Abschnitte (4b, 4c) des Abgaskanals (4) so miteinander verbindet, dass eine Einspritzdüse des Reduktionsmittel-Injektors (20) zu einem nachgeordneten Endabschnitt (11) des Elements (10) weist und zum Einspritzen des Reduktionsmittels zu einem nachgeordneten Endabschnitt (11) des Elements (10) ausgebildet ist, und wobei
das Reduktionsmittel Harnstoff ist und der nachgeordnete Endabschnitt (11) des Elements (10) einen Katalysator (11a) zur Förderung der Ammoniakproduktion trägt, der zum Fördern der Produktion von Ammoniak aus dem Harnstoff ausgebildet ist, **dadurch gekennzeichnet, dass**
der Reduktionsmittel-Injektor (20) in einer versetzten Öffnung (21) angeordnet ist, die eine ausgesparte Form aufweist und in den Abgaskanal (4) mündet, wobei die Einspritzdüse des Reduktionsmittel-Injektors (20) weiter von der Innenwandfläche des Abgaskanals (4) zurückgesetzt angeordnet ist.

2. Abgasreinigungsvorrichtung eines Motors nach Anspruch 1,
wobei eine Einspritzmittellinie (p) in Einspritzrichtung des Reduktionsmittel-Injektors (20) und eine Strömungsmittellinie (q) des Abgases im Abgaskanal (4) miteinander fluchten oder parallel zueinander verlaufen.

3. Abgasreinigungsvorrichtung eines Motors nach Anspruch 1 oder 2, wobei die Einspritzrichtung des Reduktionsmittels um 180 Grad entgegengesetzt zur Strömungsrichtung des Abgases verläuft.

4. Abgasreinigungsvorrichtung eines Motors nach einem der Ansprüche 1 bis 3, wobei das Element (10) einen Teil eines Abgasreinigungsteils (A) aufweist.

5. Abgasreinigungsvorrichtung eines Motors nach einem der Ansprüche 1 bis 4, wobei das Element (10) ein perforiertes Element, ein plattenförmiges Element, ein stabförmiges Element, ein maschenförmiges Element oder ein Element mit einer Wabenstruktur aufweist, das an der Innenseite der Innenwandfläche des Abgaskanals (4) angeordnet ist.

6. Abgasreinigungsvorrichtung eines Motors nach einem der Ansprüche 1 bis 5, wobei die versetzte Öffnung (21) ein Verteilerteil aufweist, das zwischen dem Abgaskanal (4) und dem Reduktionsmittel-Injektor (20) angeordnet und zum Verteilen eines Reduktionsmittels ausgebildet ist.

7. Abgasreinigungsvorrichtung eines Motors nach einem der Ansprüche 1 bis 6, ferner aufweisend einen Mischer (30), der zwischen dem Reduktionsmittel-Injektor (20) und dem Reduktionskatalysator (13) angeordnet ist.

## Revendications

1. Dispositif de purification de gaz d'échappement d'un moteur, comprenant :
un passage d'échappement (4) s'étendant à partir d'une chambre de combustion (1) d'un moteur (8) ;
un élément (10) qui est disposé sur un côté interne d'une surface de paroi interne du passage d'échappement et qui est destiné à être chauffé par des gaz d'échappement passant par celui-ci ;
un injecteur de réducteur (20) disposé en aval de l'élément (10) et configuré pour injecter un réducteur dans les gaz d'échappement ; et
un catalyseur de réduction (13) pour purifier de l'oxyde d'azote contenu dans les gaz d'échappement avec le réducteur ou une substance produite à partir du réducteur,
dans lequel l'injecteur de réducteur (20) est disposé sur le côté externe d'une section de courbure (4a) connectant des sections linéaires (4b, 4c) du passage d'échappement (4) de sorte qu'une buse d'injection de l'injecteur de réducteur (20) fait face à une portion d'extrémité aval (11) de l'élément (10) et configurée pour injecter le réducteur vers une portion d'extrémité aval (11) de l'élément (10), et dans lequel
le réducteur est l'urée et la portion d'extrémité aval (11) de l'élément (10) supporte un catalyseur de promotion de production d'ammoniac (11a) configuré pour promouvoir la production d'ammoniac à partir de l'urée, **caractérisé en ce que**
l'injecteur de réducteur (20) est disposé à l'intérieur d'une perforation décalée (21) présentant une forme en creux et présentant une ouverture dans le passage d'échappement (4) et la buse d'injection de l'injecteur de réducteur (20) est disposée plus en arrière de la surface de paroi interne du passage d'échappement (4).

2. Dispositif de purification de gaz d'échappement d'un moteur, selon la revendication 1,
dans lequel une ligne centrale d'injection (p) dans la direction d'injection de l'injecteur de réducteur (20) et une ligne centrale d'écoulement (q) des gaz d'échappement dans le passage d'échappement (4) sont alignées l'une avec l'autre ou parallèles l'une à l'autre.

3. Dispositif de purification de gaz d'échappement d'un moteur, selon la revendication 1 ou 2,
dans lequel la direction d'injection du réducteur est 180 degrés opposés à la direction d'écoulement de gaz d'échappement.

4. Dispositif de purification de gaz d'échappement d'un moteur, selon l'une quelconque des revendications 1 à 3, dans lequel l'élément (10) comprend une partie d'une partie de purification de gaz d'échappement (A).

5. Dispositif de purification de gaz d'échappement d'un moteur, selon l'une quelconque des revendications 1 à 4,
dans lequel l'élément (10) comprend un élément perforé, un élément en forme de plaque, un élément en forme de barre, un élément en forme de grille, ou un élément de structure de nid d'abeille disposé sur le côté interne de la surface de paroi interne du passage d'échappement (4).

6. Dispositif de purification de gaz d'échappement d'un moteur, selon l'une quelconque des revendications 1 à 5
dans lequel la perforation décalée (21) présente une partie de diffusion disposée entre le passage d'échappement (4) et l'injecteur de réducteur (20) et configurée pour diffuser un réducteur.

7. Dispositif de purification de gaz d'échappement d'un moteur, selon l'une quelconque des revendications 1 à 6, comprenant de plus un mélangeur (30) disposé entre l'injecteur de réducteur (20) et le catalyseur de réduction (13).
